# FASCICULE DE BREVET EUROPEEN

(11) **EP 2 761 712 B1**
(45) Date de publication et mention de la délivrance du brevet: **25.03.2020**
(21) Numéro de dépôt: 12773080.2
(22) Date de dépôt: 25.09.2012
(51) Int. Cl.: G06Q 10/06, H02J 3/14, H02J 13/00, G06Q 50/06

(54) **PROCEDE, SYSTEME ET DISPOSITIF DE COMMANDE D'UN APPAREIL**
VERFAHREN, SYSTEM UND GERÄT ZUR STEUERUNG EINES APPARATS
PROCESS, SYSTEM UND DEVICE FOR CONTROLLING AN APPARATUS

(30) Priorité: 29.09.2011 FR 1158750
(43) Date de publication de la demande: 06.08.2014
(73) Titulaire: Orange, 75015 Paris (FR)
(72) Inventeur: LAMER, Bastien, F-92190 Meudon (FR)
(74) Mandataire: Regimbeau
(86) Numéro de dépôt international: PCT/FR2012/052145
(87) Numéro de publication internationale: WO 2013/045816

(56) Documents cités:
- WO-A1-2009/023230
- US-A1- 2003 045 968
- US-A1- 2011 153 101

## Description

L'invention concerne un procédé de commande d'un appareil en vue de réduire sa consommation énergétique, ainsi qu'un système et un dispositif associés.

Il est connu de piloter à distance des équipements consommateurs d'énergie, par exemple des équipements électriques, notamment afin de réguler leur consommation énergétique. On utilise typiquement pour ce faire une liaison téléphonique (fixe ou mobile) grâce à laquelle l'utilisateur peut envoyer des commandes de pilotage destinées aux équipements, par exemple électriques, situés par exemple à son domicile.

Ces solutions ne permettent toutefois pas une interaction avec le fournisseur d'énergie.

Il a de ce fait été également proposé que le fournisseur d'énergie (par exemple électrique) puisse lui-même piloter des équipements situés au domicile de l'utilisateur. On prévoit dans ce cas que l'utilisateur puisse configurer les niveaux de réduction de consommation électrique qu'il accepte de subir.

Cette solution ne permet pas toutefois à l'utilisateur d'adapter de manière dynamique la régulation de la consommation énergétique en fonction non seulement de la demande du fournisseur d'énergie, mais également de son propre confort au moment où la réduction de consommation énergétique est souhaitée par le fournisseur d'énergie.

Le document US-A-2003/0045968 décrit un procédé de commande selon le préambule de la revendication 1 et un dispositif de commande selon le préambule de la revendication 11.

Dans ce contexte, l'invention propose un procédé de commande d'au moins un appareil consommateur d'énergie suivant la revendication 1.

La réduction d'énergie peut ainsi par exemple être déclenchée par le fournisseur d'énergie mais reste soumise à l'accord de l'utilisateur, et ce de manière dynamique.

Il s'agit par exemple d'un appareil électrique et d'une demande de réduction de la consommation électrique émise par le fournisseur d'énergie électrique.

L'étape de sollicitation peut être mise en œuvre par émission d'un message (éventuellement vocal) à destination du terminal de l'utilisateur, ce qui permet de contacter facilement l'utilisateur lorsqu'arrive la demande de régulation.

Le message est par exemple un message vocal émis par un serveur vocal.

En variante, le message peut être affiché sur un support visuel. Le message est par exemple affiché sur l'écran d'un dispositif électronique de l'utilisateur.

Ladite information indicative peut quant à elle être un code DTMF émis par le terminal. Ceci est intéressant notamment quand le message émis est un message vocal généré par un serveur vocal, qui peut alors recevoir le code DTMF.

Ladite information indicative peut en variante être comprise dans un message de données émis par le terminal.

Le procédé peut également comprendre une étape de réception de données de configuration, sélectionnées par exemple par l'utilisateur. De telles données de configuration sont par exemple des données destinées à déclarer l'association d'un type d'appareil à une prise intelligente, ou des données destinées à préciser le type d'action de régulation souhaitée par appareil. La commande dudit appareil peut alors être réalisée en fonction d'au moins une donnée parmi lesdites données de configuration : l'utilisateur peut ainsi adapter finement la mise en œuvre de la réduction demandée en fonction de ses besoins ou de son confort.

On peut prévoir également une étape de réception d'une information de durée ; la commande de l'appareil en fonction de l'information reçue peut dans ce cas être réalisée pendant un temps correspondant à ladite information de durée. Passée cette période, le fonctionnement de l'appareil peut alors reprendre dans les conditions où il fonctionnait avant réception de la commande.

La demande de régulation est par exemple reçue d'un serveur d'un fournisseur d'énergie, comme déjà indiqué. Ce serveur est par exemple situé au niveau d'une plateforme du fournisseur d'énergie. Cette structure est particulièrement adaptée à l'émission d'une demande de régulation en cas de détection d'un pic de consommation.

On peut prévoir en outre une étape d'émission de ladite information indicative à destination du serveur du fournisseur d'énergie. Ceci permet de tenir compte, au niveau du fournisseur d'énergie, de l'acceptation de la réduction par l'utilisateur, par exemple en lui faisant bénéficier de tarifs préférentiels.

Par ailleurs, la demande de régulation peut être comprise dans une partie SDP d'un message conforme au protocole SIP, ce qui constitue une manière particulièrement simple et efficace de transmettre la demande de régulation.

Comme décrit plus loin, certaines étapes du procédé décrit ci-dessus sont mises en œuvre par une passerelle domestique, située dans les locaux (au domicile dans le cas dune passerelle domestique) où est également situé l'appareil électrique. Certaines étapes peuvent également être réalisées par une passerelle domotique (en anglais *"M2M box"*) raccordée ou non à la passerelle domestique. Certaines étapes peuvent par ailleurs être mises en œuvre par une passerelle distante afin d'alléger les traitements au niveau de la passerelle locale (par exemple domestique).

L'invention prévoit également un dispositif de commande d'au moins un appareil consommateur d'énergie suivant la revendication 11.

Le système et le dispositif qui viennent d'être proposés peuvent en outre comporter de manière optionnelle les caractéristiques évoquées plus haut en termes de procédé.

Enfin, l'invention propose un programme d'ordinateur suivant la revendication 12..

D'autres caractéristiques et avantages de l'invention apparaitront à la lumière de la description qui suit, fait en référence aux dessins annexés dans lesquels :
- la figure 1 représente un premier exemple de mise en œuvre de l'invention ;
- la figure 2 représente un procédé conforme aux enseignements de l'invention et mis en œuvre dans le contexte de la figure 1 ;
- la figure 3 représente en second exemple de mise en œuvre de l'invention ;
- la figure 4 présente les étapes d'un procédé mis en œuvre dans le contexte de la figure 3 conformément aux enseignements de l'invention ;
- la figure 5 représente une variante de réalisation de l'example présenté à la figure 1.

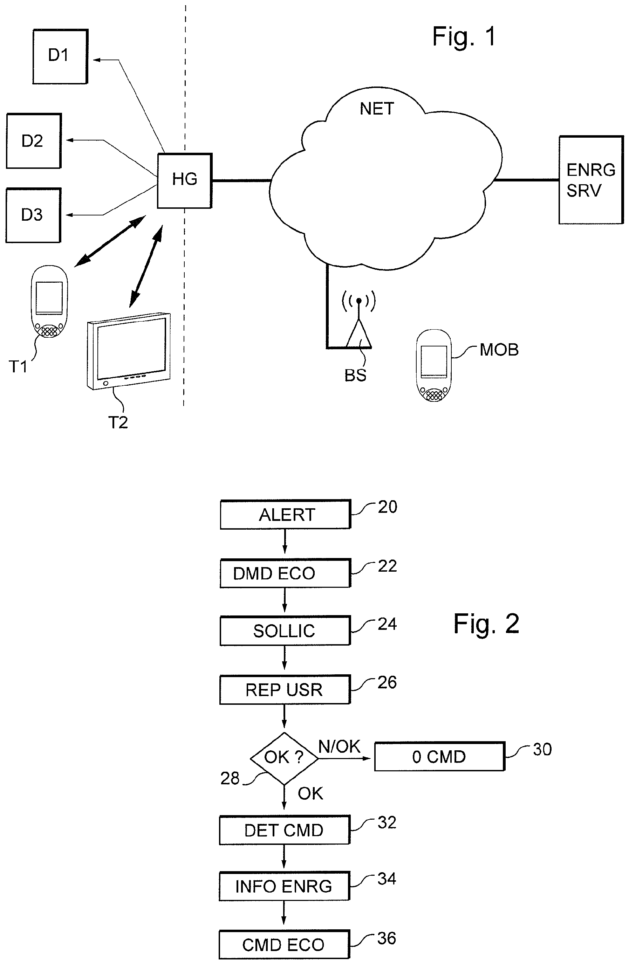

La **figure 1** représente des appareils électriques D1, D2, D3 connectés à une passerelle domestique HG de telle sorte que la passerelle domestique HG puisse piloter chacun des appareils électriques D1, D2, D3 de manière à réguler leur consommation électrique. Un tel pilotage est réalisé par exemple par envoi d'une commande de la passerelle domestique HG à l'appareil D1, D2, D3 concerné, ou en variante par la commande d'une prise intelligente (en anglais *"Smart Plug"*) à travers laquelle l'appareil concerné D1, D2, D3 est branché au réseau d'alimentation électrique.

On peut également utiliser des modules d'adaptation de protocole (ou *"wrappers"*) qui reçoivent des commandes de pilotage de la passerelle domestique HG et pilotent (après conversion de la commande d'un protocole à un autre protocole) les appareils ou leur prise intelligente afin de réguler leur consommation électrique.

On remarque que la passerelle domestique HG, les appareils D1, D2, D3 ainsi que des terminaux T1, T2 sont situés dans la sphère domestique de l'utilisateur, c'est-à-dire au domicile de celui-ci. La passerelle domestique HG sert d'ailleurs d'interface entre les dispositifs électriques (par exemple les appareils D1, D2, D3 et les terminaux T1, T2) situés dans la sphère domestique et des dispositifs électroniques situés en dehors de celle-ci, tel qu'un serveur ENRG SRV du fournisseur d'énergie électrique qui fournit l'alimentation électrique aux dispositifs électriques situés dans la sphère domestique (notamment les appareils D1, D2, D3).

Ce serveur ENRG SRV peut échanger des données avec la passerelle domestique HG à travers un réseau informatique tel que le réseau Internet (référencé NET sur le dessin).

La figure 2 représente un exemple de procédé mis en œuvre dans le contexte qui vient d'être décrit afin de réguler la consommation électrique des appareils D1, D2, D3 de la sphère domestique lorsque le fournisseur d'énergie détecte un pic de consommation.

Les étapes de ce procédé réalisées par la passerelle domestique HG sont par exemple mises en œuvre du fait de l'exécution, par un microprocesseur de la passerelle, d'instructions d'un programme d'ordinateur mémorisé au sein de la passerelle domestique HG.

Lorsque l'imminence d'un pic de consommation est détectée, une alerte se produit au niveau de la plateforme du fournisseur d'énergie électrique (étape 20), ce qui provoque l'émission, par le serveur du fournisseur d'énergie ENRG SRV et à destination de la passerelle domestique HG, d'un message indicatif d'une demande d'économie d'énergie (étape 22). Ce message peut en outre inclure des données quantifiant l'économie d'énergie demandée, par exemple sous forme d'une puissance électrique.

On prévoit par exemple qu'un tel message du serveur ENRG SRV à la passerelle domestique HG soit un message conforme au protocole SIP (pour *"Session Initiation Protocol*") dont le champ SDP est modifié afin de véhiculer les paramètres d'énergie de la manière suivante :

| | | |
|---|---|---|
| Version | v | = 0 |
| Origine | d | = DiaGen GRID NP ADRESSE |
| Session Name | s | = Machine |
| Connexion | c | = GRID NP ADRESSE |
| Time | t | = 0 0 |
| Media | m | = Power 120/50 |
| Attribut | a | = Amount 1000 |

Dans cet exemple, les paramètres NP et ADRESSE correspondent respectivement au numéro et à l'adresse du point de livraison de l'électricité, ici dans le cas du réseau dénommé SMART GRID.

Dans cet exemple, le champ MEDIA est utilisé pour indiquer le type d'énergie (ici par exemple 120 V, 50 Hz). La valeur indiquée après le mot *"Amount"* est la quantité de réduction de puissance demandée (en kW).

Le message émis par le serveur ENRG SRV est donc reçu par la passerelle domestique HG, qui en extrait l'information utile représentant la réduction de puissance demandée, par exemple après vérification de l'identifiant de l'émetteur du message (afin de s'assurer qu'un tel message provient bien du fournisseur d'énergie). La passerelle domestique mémorise par exemple pour ce faire un identifiant du serveur du fournisseur d'énergie ENRG SRV pour comparaison avec l'identifiant de l'émetteur du message.

La passerelle domestique HG (par exemple au moyen d'un module de gestion du protocole SIP, ou *"SIP User Agent*") déclenche alors un appel vers un ou plusieurs terminaux de l'utilisateur, tels que les terminaux T1, T2 présents dans la sphère domestique et un terminal mobile MOB (étape 24).

Dans l'exemple représenté en figure 1, le terminal T1 est un téléphone sans fil qui peut échanger des données et/ou un signal vocal avec la passerelle domestique HG. Le terminal T2 est une tablette numérique qui peut échanger des données, typiquement par une liaison radio, avec la passerelle domestique HG. On notera que le terminal T2 peut également être une télévision connectée.

Le terminal mobile MOB est par exemple un téléphone cellulaire qui peut échanger des données et/ou un signal vocal avec la passerelle domestique par l'intermédiaire d'un réseau cellulaire contenant notamment une station de base BS proche du terminal mobile MOB. On remarque à cet égard que, par souci de simplification, on a représenté la station de base BS comme connectée au réseau, où sont également connectée la passerelle domestique HG et le serveur ENRG SRV. Un tel réseau comprend souvent en pratique plusieurs réseaux interconnectés (dont typiquement le réseau de l'opérateur fournissant l'accès via la passerelle domestique HG, le réseau de l'opérateur de téléphonie mobile comprenant la station de base BS et le réseau Internet).

Les appels émis par la passerelle domestique HG vers les terminaux T1, T2, MOB peuvent être émis de manière séquentielle (c'est-à-dire successivement à chaque terminal) ou simultanée vers l'ensemble des terminaux. Par ailleurs, on peut prévoir la possibilité pour l'utilisateur de configurer son module de gestion du protocole SIP afin de limiter le nombre de demandes retransmises à l'utilisateur (au moyen de l'appel à ces terminaux comme il vient d'être indiqué) et/ou la plage horaire pendant laquelle les demandes sont retransmises (par exemple à un appel maximum entre 19 h et 8 h du matin). Le premier message émis par le serveur ENRG SRV et relayé par la passerelle vers un terminal T1, T2, MOB, peut utiliser le protocole SIP. Les différents choix de régulation sont insérés dans le champ SDP (pour « Session Data Protocol », en anglais) du message SIP. Cette insertion peut être faite soit par le serveur ENRG SRV (dans le cas où le calcul des scénarios est effectué dans un serveur du réseau de l'opérateur), soit par la passerelle résidentielle (cas où le calcul est effectué par cette dernière, pourvu dune fonction d'interception/modification du message SIP, de type proxy ou Back-to-Back User Agent). Le terminal, sur réception d'un tel message SIP provenant du serveur ENRG SRV (ou de la passerelle résidentielle si celle-ci se trouve en coupure de la signalisation), extrait alors les données « choix d'action de régulation » du champ SDP et les propose sur un écran à l'utilisateur. L'utilisateur peut alors choisir parmi les différentes actions via une interface sur le terminal (tactile, DTMF, ǔ) et sa réponse est envoyée au serveur ENRG SRV (via la passerelle résidentielle, le cas échéant) dans un message SIP « 200 OK ».

Selon une autre possibilité, intéressante en particulier pour les appels destinés aux téléphones tels que les terminaux T1 et MOB, la passerelle domestique comprend un serveur vocal qui génère, lorsqu'un terminal est décroché, une annonce vocale présentant la demande du fournisseur d'énergie à l'utilisateur qui décroche. Une telle annonce comprend une interrogation de l'utilisateur sur son souhait d'accepter la demande de réduction d'énergie électrique consommée, avec éventuellement une mention de la quantité d'énergie (typiquement une puissance électrique) à économiser. On remarque qu'en variante, le serveur vocal pourrait être hébergé dans le réseau NET.

L'annonce vocale comprend également une partie qui indique à l'utilisateur comment communiquer ses instructions, par exemple par pression sur une première touche du clavier du terminal pour accepter la demande et par pression sur une seconde touche du clavier du terminal pour refuser la demande.

Dans ce cas, la réponse de l'utilisateur est véhiculée au moyen d'un code DTMF représentatif de la touche enfoncée par l'utilisateur, et donc de son choix.

La passerelle domestique HG reçoit ainsi, en réponse à sa demande, une information qui indique l'acceptation ou le refus de l'utilisateur (étape 26).

Selon une seconde possibilité, intéressante en particulier lorsque l'utilisateur utilise la tablette numérique T2 qui comporte un écran tactile, la passerelle domestique HG commande l'affichage sur l'écran d'un message exprimant la demande de réduction de consommation électrique et attend en réponse le choix de l'utilisateur, indiqué par exemple en fonction de la zone de l'écran tactile du terminal T2 touchée par l'utilisateur.

Dans ce cas également, le terminal renvoie à la passerelle domestique HG une information qui indique l'acceptation ou le refus de la demande par l'utilisateur.

On remarque par ailleurs que l'on peut éventuellement prévoir la mise en œuvre d'actions (commandes des appareils) par défaut si l'utilisateur ne répond à aucun des appels.

Quelle que soit la solution utilisée pour transmettre la réponse de l'utilisateur à la passerelle domestique HG, la passerelle domestique HG teste à l'étape 28 si la réponse de l'utilisateur est une acceptation ou un refus de la demande de réduction de consommation d'énergie.

En cas de refus, aucune action n'est entreprise (étape 30) de sorte que le fonctionnement et la consommation électrique des appareils électriques D1, D2, D3 sont inchangés.

Si l'utilisateur accepte la demande de réduction de consommation d'énergie, la passerelle domestique HG détermine les actions à mener et les commandes à effectuer (étape 32).

Pour ce faire, on déclenche par exemple un serveur d'application hébergé par la passerelle domestique : ce serveur d'application reçoit des informations de mesure indicatives de la consommation électrique des appareils D1, D2, D3 (par exemple déterminée par mesure de consommation électrique au niveau de prises d'alimentation des dispositifs D1, D2, D3 reliées à la passerelle domestique HG) et détermine, sur la base de ces informations de mesure, des actions envisageables pour réduire la consommation électrique de la sphère domestique conformément à la demande (ou au moins en vue d'une réduction partielle de la demande).

Les différentes actions envisagées (par exemple une action par appareil électrique, ou en variante une plage de réduction de puissance par appareil électrique, exprimée par exemple par un pourcentage de réduction de la puissance consommée) peuvent alors éventuellement être soumises à l'utilisateur afin qu'il donne individuellement son accord pour chacune des actions envisagées, ce qui permet d'adapter finement sa réponse à la demande de réduction de consommation, et de tenir compte au mieux de son confort personnel.

Le serveur d'application de la passerelle domestique peut également interroger l'utilisateur sur la durée pendant laquelle il souhaite voir réalisées les actions envisagées.

L'interrogation de l'utilisateur et la prise en compte de ses réponses dans les échanges qui viennent d'être décrits sont par exemple mise en œuvre par l'une des modalités décrites plus haut pour la sollicitation de l'utilisateur (étape 24) et la prise en compte de sa réponse (étape 26), à savoir l'utilisation d'un téléphone (terminal T1 ou MOB) ou d'une tablette numérique T2.

Une fois les actions de régulation déterminées, la passerelle domestique HG peut éventuellement émettre (étape 34) à destination du serveur du fournisseur d'énergie ENRG SRV une notification qui indique les actions de réduction envisagées par l'utilisateur, ou en variante seulement dans quelle mesure l'utilisateur accède à la demande de réduction (par exemple par envoi de la valeur de réduction de puissance électrique acceptée).

A réception de cette notification, le fournisseur d'énergie électrique peut ainsi anticiper les réductions de consommation et faire bénéficier l'utilisateur par exemple de tarifs préférentiels ou d'aide au renouvellement de ses appareils électriques vétustes.

Les actions de réduction de consommation électrique déterminées sont alors effectuées au moyen de la commande, par la passerelle domestique HG, des appareils électriques D1, D2, D3 (étape 36), ou de prises intelligentes d'alimentation de ces appareils.

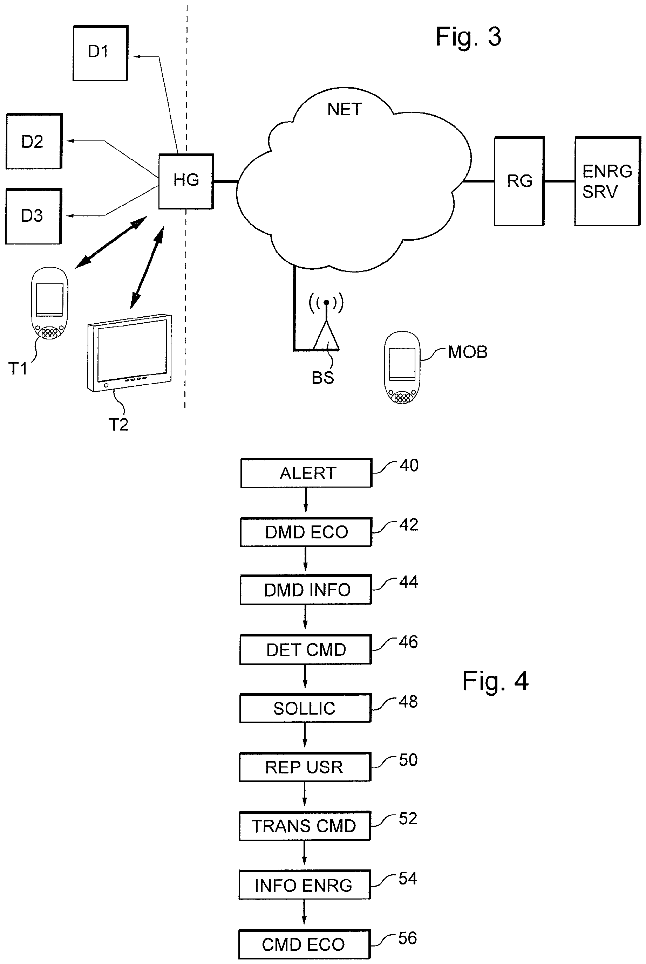

La **figure 3** représente une variante de réalisation dans laquelle on utilise une passerelle distante RG située au niveau d'une plateforme de l'opérateur fournissant au domicile de l'utilisateur, via la passerelle domestique HG, l'accès au réseau et des services de téléphonie.

On peut alléger ainsi les traitements réalisés au niveau de la passerelle domestique et réserver la gestion des comptes clients à l'opérateur (notamment l'association du nom de l'utilisateur à son adresse IP). La passerelle distante RG peut aussi authentifier la demande du serveur ENRG SRV avant de la retransmettre vers les passerelles domestiques. Dans ce contexte, le fournisseur d'énergie envoie les requêtes avec le nom de ses clients et la passerelle distante RG transmet la requête à l'utilisateur concerné.

La **figure 4** représente un exemple de procédé mis en œuvre dans ce contexte.

Le mode de réalisation des figures 3 et 4 comprend des aspects communs aux modes de réalisation déjà décrits en référence aux figures 1 et 2 et ces aspects ne seront donc pas décrits en détail à nouveau.

Lorsqu'une alerte de consommation d'énergie est détectée au niveau de la plateforme du fournisseur d'énergie (étape 40), une demande de régulation est transmise à la passerelle distante RG située au niveau de la plateforme de l'opérateur (étape 42).

La passerelle distante RG émet alors une requête destinée à la passerelle domestique HG (étape 44) afin que la passerelle domestique HG lui fournisse la liste des appareils D1, D2, D3 sous tension (ainsi que par exemple leur consommation électrique) au sein de la sphère domestique. Un mécanisme de traversée du NAT ("*Network Address Translator",* en anglais) de la passerelle domestique pourra au besoin être mis en œuvre, reposant par exemple sur la procédure UpnP IGD.

La passerelle domestique HG sollicite les appareils électriques D1, D2, D3 (ou en variante des prises d'alimentation intelligentes de ces appareils) et répond à la requête de la passerelle distante RG en lui communiquant des données désignant les appareils sous tension et leur consommation électrique.

La passerelle distante RG détermine, sur la base de la demande du fournisseur et des données reçues de la passerelle domestique, une liste des actions à effectuer sur les appareils électriques D1, D2, D3 afin de répondre à la demande du fournisseur d'énergie (étape 46).

Une notification est alors envoyée à l'étape 48 aux terminaux de l'utilisateur (sous forme d'un appel au moyen d'un serveur vocal ou d'un message de données) comme déjà décrit plus haut pour l'étape 24.

Cette notification sollicite l'utilisateur sur son souhait d'accepter ou de refuser la demande de régulation. Elle peut en outre solliciter individuellement l'utilisateur sur les différentes actions déterminées à l'étape 46.

L'utilisateur fournit son choix à l'étape 50, par exemple au moyen d'un ou plusieurs codes DTMF lorsqu'il est contacté par un serveur vocal, ou au moyen d'un message de données en réponse au message de données reçu : l'utilisateur indique son acceptation ou son refus de la diminution de consommation d'énergie et/ou son acceptation ou son refus de chacune des actions envisagées comme déterminé à l'étape 46. On note à cet égard qu'on peut se limiter à proposer à l'utilisateur de choisir individuellement pour chaque action (sans lui demander au préalable s'il accepte ou non la demande de régulation) ; dans ce cas, une acceptation d'au moins une action est considérée comme une acceptation au moins partielle de la demande de régulation, tandis qu'un refus de toutes les actions envisagées est considéré comme un refus de la demande de régulation.

On remarque que, dans le présent mode de réalisation, le choix de l'utilisateur est communiqué à la passerelle distante RG.

La passerelle distante RG transmet alors à l'étape 52 un message de commande à la passerelle domestique HG incluant les actions à réaliser (déterminées à l'étape 46 et confirmées par l'utilisateur à l'étape 50).

La passerelle distante RG peut par ailleurs communiquer (étape 54) ces informations (ou seulement la quantité de réduction d'énergie) au serveur du fournisseur d'énergie ENRG SRV.

Enfin, la passerelle domestique HG commande (étape 56) les dispositifs électriques D1, D2, D3 (ou des prises intelligentes associées à ceux-ci) afin de mettre en œuvre les actions déterminées et confirmées par l'utilisateur, ce qui a pour conséquence la réduction de la consommation électrique de ces appareils.

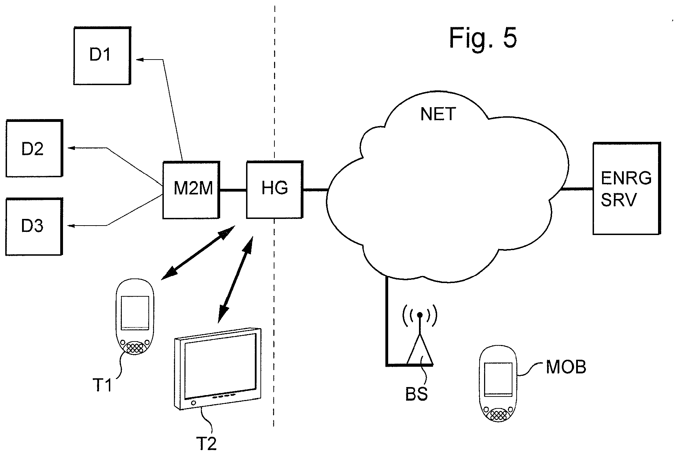

La **figure** 5 représente une variante de réalisation de l'exemple de mise en œuvre de l'invention décrit ci-dessus en référence à la figure 1. Les éléments communs à ces deux figures ne seront donc pas décrits en détail à nouveau.

Dans cette variante de réalisation, une passerelle domotique M2M est interposée entre la passerelle domestique HG et les appareils électriques D1, D2, D3 à piloter. La passerelle domotique M2M est ici connectée à la passerelle domestique HG par une liaison filaire, par exemple de type Ethernet, à travers laquelle la passerelle domestique HG et la passerelle domotique M2M échangent des données. En variante, la passerelle domestique HG et la passerelle domotique M2M pourraient échanger des données au moyen dune connexion sans fil.

La passerelle domotique M2M pilote les appareils électriques D1, D2, D3 et peut ainsi réguler leur consommation électrique.

La passerelle domotique M2M peut par ailleurs échanger des données avec le serveur du fournisseur d'énergie ENRG SRV, via la passerelle domestique HG, et recevoir ainsi notamment la demande de régulation du fournisseur d'énergie.

La passerelle domotique M2M peut également solliciter l'utilisateur par l'intermédiaire de la passerelle domestique HG, par exemple en émettant un appel (ou un message) à destination des terminaux T1, T2, MOB de l'utilisateur. La réponse de l'utilisateur (sur l'acceptation ou le refus de la demande de régulation) est transmise à la passerelle domotique M2M via la passerelle domestique HG.

En effet, dans le mode de réalisation décrit ici, les terminaux T1, T2 sont connectés au moyen dune liaison sans fil à la passerelle domestique HG et le terminal mobile MOB est accessible par la passerelle domestique HG (la passerelle domestique HG étant connecté à un réseau de téléphonie). On pourrait prévoir en variante que certains terminaux soient directement accessibles par la passerelle domotique M2M (c'est-à-dire par exemple que les terminaux situés dans la sphère domestique puissent être directement connectés à la passerelle domestique au moyen dune liaison sans fil).

Les modes de réalisation qui précèdent ne sont que des exemples envisageables pour la mise en œuvre de l'invention, qui ne s'y limite pas.

## Revendications

1. Procédé de commande d'au moins un appareil consommateur d'énergie (D1, D2, D3), comprenant les étapes suivantes :
- sollicitation (24; 48) d'un utilisateur à réception d'une demande de régulation ;
- réception (26; 50), en réponse à ladite sollicitation, d'une information indicative d'une acceptation au moins partielle ou d'un refus de la demande par l'utilisateur ;
- commande (36; 56) dudit appareil (D1, D2, D3), de manière à diminuer la consommation énergétique dudit appareil,
l'étape de sollicitation (24; 48) étant mise en œuvre par une passerelle domestique émettant un message à destination d'un terminal (T1, T2, MOB) de l'utilisateur,
caractérisé en ce d'un que l'information indicative d'une acceptation au moins partielle ou d'un refus de la demande par l'utilisateur est reçue (26 ; 50) du terminal (T1, T2, MOB) de l'utilisateur par la passerelle domestique,
la commande (36; 56) dudit appareil (D1, D2, D3) est effectuée par la passerelle domestique en fonction de l'information reçue, de manière à diminuer la consommation énergétique dudit appareil si l'information reçue indique une acceptation au moins partielle.

2. Procédé de commande selon la revendication 1, **caractérisé en ce que** le terminal (T1, T2, MOB) de l'utilisateur est choisi parmi un téléphone sans fil (T1), une tablette numérique (T2), un terminal mobile (MOB).

3. Procédé de commande selon la revendication 2, **caractérisé en ce que** le message est un message vocal émis par un serveur vocal.

4. Procédé de commande selon la revendication 2 ou 3, **caractérisé en ce que** ladite information indicative est un code DTMF émis par le terminal (T1, MOB).

5. Procédé de commande selon la revendication 2, **caractérisé en ce que** ladite information indicative est comprise dans un message de données émis par le terminal (T2).

6. Procédé de commande selon la revendication 1, **caractérisé par** une étape de réception (32; 46) de données de configuration, la commande (36; 56) dudit appareil (D1, D2, D3) étant réalisée en fonction d'au moins une donnée parmi lesdites données de configuration.

7. Procédé de commande selon la revendication 1, **caractérisé par** une étape de réception d'une information de durée, la commande (36 ; 56) de l'appareil (D1, D2, D3), en fonction de l'information reçue étant réalisée pendant un temps correspondant à ladite information de durée.

8. Procédé de commande selon la revendication 1, **caractérisé en ce que** la demande de régulation est reçue d'un serveur (ENRG SRV) d'un fournisseur d'énergie.

9. Procédé de commande selon la revendication 8, **caractérisé par** une étape d'émission (34; 54) de ladite information indicative à destination du serveur (ENRG SRV) du fournisseur d'énergie.

10. Procédé de commande selon la revendication 1, **caractérisé en ce que** la demande de régulation est comprise dans une partie SDP d'un message conforme au protocole SIP.

11. Dispositif de commande d'au moins un appareil consommateur d'énergie (D1, D2, D3), comprenant :
- des moyens de sollicitation (24 ; 48) d'un utilisateur à réception d'une demande de régulation ;
- des moyens de réception (26 ; 50), en réponse à ladite sollicitation, d'une information indicative d'une acceptation au moins partielle ou d'un refus de la demande par l'utilisateur ;
les moyens de sollicitation (24 ; 48) étant aptes à émettre par une passerelle domestique un message à destination d'un terminal (T1, T2, MOB) de l'utilisateur,
**caractérisé en ce que** les moyens de réception comprennent la passerelle domestique configurée pour recevoir (26 ; 50) du terminal (T1, T2, MOB) de d'un l'utilisateur l'information indicative d'une acceptation au moins partielle ou d'un refus de la demande par l'utilisateur,
la passerelle domestique étant configurée pour émettre une commande (36 ; 56) dudit appareil (D1, D2, D3) en fonction de l'information reçue, de manière à diminuer la consommation énergétique dudit appareil (D1, D2, D3) si l'information reçue indique une acceptation au moins partielle.

12. Programme d'ordinateur comportant des instructions pour la mise en d'un œuvre des étapes de sollicitation (24 ; 48), de réception (26 ; 50) et de commande (36 ;56) du procédé selon la revendication 1 lorsque ce programme est exécuté par un processeur de la passerelle domestique.

## Patentansprüche

1. Verfahren zur Steuerung mindestens eines energieverbrauchenden Geräts (D1, D2, D3), das die folgenden Schritte enthält:
- Beanspruchung (24; 48) eines Benutzers bei Empfang einer Regelungsanforderung;
- Empfang (26; 50), als Antwort auf die Beanspruchung, einer indikativen Angabe einer zumindest teilweisen Annahme oder einer Zurückweisung der Anforderung durch den Benutzer;
- Steuerung (36; 56) des Geräts (D1, D2, D3), um den Energieverbrauch des Geräts zu verringern,
wobei der Beanspruchungsschritt (24; 48) von einem Home-Gateway durchgeführt wird, das eine Nachricht an ein Endgerät (T1, T2, MOB) des Benutzers sendet,
**dadurch gekennzeichnet, dass** die indikative Angabe einer zumindest teilweisen Annahme oder einer Zurückweisung der Anforderung durch den Benutzer vom Endgerät (T1, T2, MOB) des Benutzers durch das Home-Gateway empfangen wird (26; 50),
die Steuerung (36; 56) des Geräts (D1, D2, D3) vom Home-Gateway abhängig von der empfangenen Angabe ausgeführt wird, um den Energieverbrauch des Geräts zu verringern, wenn die empfangene Angabe eine zumindest teilweise Annahme anzeigt.

2. Steuerverfahren nach Anspruch 1, **dadurch gekennzeichnet, dass** das Endgerät (T1, T2, MOB) des Benutzers ausgewählt wird unter einem schnurlosen Telefon (T1), einem Tablet-PC (T2), einem mobilen Endgerät (MOB).

3. Steuerverfahren nach Anspruch 2, **dadurch gekennzeichnet, dass** die Nachricht eine von einem Sprachserver gesendete Sprachnachricht ist.

4. Steuerverfahren nach Anspruch 2 oder 3, **dadurch gekennzeichnet, dass** die indikative Angabe ein vom Endgerät (T1, MOB) gesendeter DTMF-Code ist.

5. Steuerverfahren nach Anspruch 2, **dadurch gekennzeichnet, dass** die indikative Angabe in einer vom Endgerät (T2) gesendeten Datennachricht enthalten ist.

6. Steuerverfahren nach Anspruch 1, **gekennzeichnet durch** einen Empfangsschritt (32; 46) von Konfigurationsdaten, wobei die Steuerung (36; 56) des Geräts (D1, D2, D3) abhängig von mindestens einem Datenwert unter den Konfigurationsdaten durchgeführt wird.

7. Steuerverfahren nach Anspruch 1, **gekennzeichnet durch** einen Empfangsschritt einer Angabe über die Dauer, wobei die Steuerung (36; 56) des Geräts (D1, D2, D3) abhängig von der empfangenen Angabe während einer Zeit entsprechend der Angabe über die Dauer durchgeführt wird.

8. Steuerverfahren nach Anspruch 1, **dadurch gekennzeichnet, dass** die Regelungsanforderung von einem Server (ENRG SRV) eines Energieversorgers empfangen wird.

9. Steuerverfahren nach Anspruch 8, **gekennzeichnet durch** einen Sendeschritt (34; 54) der indikativen Angabe an den Server (ENRG SRV) des Energieversorgers.

10. Steuerverfahren nach Anspruch 1, **dadurch gekennzeichnet, dass** die Regelungsanforderung in einem Teil SDP einer Nachricht entsprechend dem Protokoll SIP enthalten ist.

11. Steuervorrichtung mindestens eines energieverbrauchenden Geräts (D1, D2, D3), die enthält:
- Beanspruchungseinrichtungen (24; 48) eines Benutzers bei Empfang einer Regelungsanforderung;
- Empfangseinrichtungen (26; 50), als Antwort auf die Beanspruchung, einer indikativen Angabe einer zumindest teilweisen Annahme oder einer Zurückweisung der Anforderung durch den Benutzer;
wobei die Beanspruchungseinrichtungen (24; 48) durch ein Home-Gateway eine Nachricht an ein Endgerät (T1, T2, MOB) des Benutzers senden können,
**dadurch gekennzeichnet, dass** die Empfangseinrichtungen das Home-Gateway enthalten, das konfiguriert ist, vom Endgerät (T1, T2, MOB) des Benutzers die indikative Angabe einer zumindest teilweisen Annahme oder einer Zurückweisung der Anforderung durch den Benutzer zu empfangen (26; 50),
wobei das Home-Gateway konfiguriert ist, eine Steuerung (36; 56) des Geräts (D1, D2, D3) abhängig von der empfangenen Angabe zu senden, um den Energieverbrauch des Geräts (D1, D2, D3) zu verringern, wenn die empfangene Angabe eine zumindest teilweise Annahme anzeigt.

12. Computerprogramm, das Anweisungen zur Durchführung der Schritte der Beanspruchung (24; 48), des Empfangs (26; 50) und der Steuerung (36; 56) des Verfahrens nach Anspruch 1 aufweist, wenn dieses Programme von einem Prozessor des Home-Gateways ausgeführt wird.

## Claims

1. Method for controlling at least one energy-consuming appliance (D1, D2, D3), comprising the following steps:
- contacting (24; 48) a user upon receiving an adjustment request;
- receiving (26; 50), in response to said contacting, an item of information indicative of at least partial approval or of denial of the request by the user;
- controlling (36; 56) said appliance (D1, D2, D3) so as to reduce the energy consumption of said appliance,
the contacting step (24; 48) being implemented by a residential gateway sending a message to a terminal (T1, T2, MOB) of the user,
**characterized in that** the item of information indicative of at least partial approval or of denial of the request by the user is received (26; 50) from the user's terminal (T1, T2, MOB) by the residential gateway,
said appliance (D1, D2, D3) being controlled (36; 56) by the residential gateway on the basis of the received item of information so as to reduce the energy consumption of said appliance if the received item of information indicates at least partial approval.

2. Control method according to Claim 1, **characterized in that** the user's terminal (T1, T2, MOB) is chosen from among a wireless telephone (T1), a tablet computer (T2) and a mobile terminal (MOB).

3. Control method according to Claim 2, **characterized in that** the message is a voice message sent by a voice server.

4. Control method according to Claim 2 or 3, **characterized in that** said indicative item of information is a DTMF code sent by the terminal (T1, MOB).

5. Control method according to Claim 2, **characterized in that** said indicative item of information is contained in a data message sent by the terminal (T2) .

6. Control method according to Claim 1, **characterized by** a step (32; 46) of receiving configuration data, said appliance (D1, D2, D3) being controlled (36; 56) on the basis of at least one datum from among said configuration data.

7. Control method according to Claim 1, **characterized by** a step of receiving an item of timescale information, the appliance (D1, D2, D3) being controlled (36; 56) on the basis of the received item of information for a period corresponding to said item of timescale information.

8. Control method according to Claim 1, **characterized in that** the adjustment request is received from a server (ENRG SRV) of an energy provider.

9. Control method according to Claim 8, **characterized by** a step (34; 54) of sending said indicative item of information to the server (ENRG SRV) of the energy provider.

10. Control method according to Claim 1, **characterized in that** the adjustment request is contained in an SDP part of a message that complies with the SIP protocol.

11. Device for controlling at least one energy-consuming appliance (D1, D2, D3), comprising:
- means for contacting (24; 48) a user upon receiving an adjustment request;
- means for receiving (26; 50), in response to said contacting, an item of information indicative of at least partial approval or of denial of the request by the user;
the contacting (24; 48) means being able to send a message to a terminal (T1, T2, MOB) of the user by means of a residential gateway,
**characterized in that** the receiving means comprise the residential gateway configured to receive (26; 50) from the user's terminal (T1, T2, MOB) the item of information indicative of at least partial approval or of denial of the request by the user, the residential gateway being configured to send a command (36; 56) for controlling said appliance (D1, D2, D3) on the basis of the received item of information so as to reduce the energy consumption of said appliance (D1, D2, D3) if the received item of information indicates at least partial approval.

12. Computer program including instructions for implementing the contacting (24; 48), receiving (26; 50) and controlling (36; 56) steps of the method according to Claim 1 when this program is executed by a processor of the residential gateway.
